# EUROPEAN PATENT APPLICATION

(11) **EP 4 512 871 A1**
(43) Date of publication of application: **26.02.2025**
(21) Application number: 23192415.0
(22) Date of filing: 21.08.2023
(51) Int. Cl.: C09J 183/04, C08L 83/04, C08G 77/12, C08G 77/16, C08G 77/20, C08K 5/053

(54) **STORAGE-STABLE TWO-PART SILICONE KITS**

(71) Applicant: Glysious ApS, 2840 Holte (DK)
(72) Inventor: Skov, Anne Ladegaard, 2000 Frederiksberg (DK)
(74) Representative: Potter Clarkson

(57) **Abstract**

A storage-stable, curable two-part kit comprising: a first part (A) comprising a first crosslinkable polysiloxane polymer, a curing catalyst and glycerol, wherein said glycerol is in the form of discrete droplets uniformly distributed in said first part, and a second part (B) comprising a crosslinker for said first polysiloxane polymer.

## Description

### TECHNICAL FIELD

The present invention relates to a storage-stable, curable two-part kit which can form a cured silicone product. The kit allows for extended storage time before mixing/curing.

### BACKGROUND

The material industry is increasingly focusing on the development of non-toxic, energy-saving, and biodegradable materials to mitigate the environmental impact caused by conventional elastomers. Substrates of natural origin have emerged as a promising alternative to traditionally synthesized monomers. As an alternative, one can use green additives such as glycerol that impart the elastomer with improved properties while reducing the environmental impact of the silicone product due to the partial replacement of energy-demanding silicone with the "green" substitute glycerol. In this regard, extensive research has been conducted to investigate the resulting properties of glycerol-containing elastomers and adhesives along with the possibilities for a facile production of these silicone elastomer/adhesive products. The focus has been on how to formulate these emulsions such that the products can appear as the classical elastomer premixes commercialized for customers producing a wide range of products, mainly as two-component systems that react upon mixing with or without external energy sources (heat, UV, etc) and with no need to alter oven lengths etc due to similar curing times of pristine elastomers/adhesives compared to the reactive emulsions.

Silicone elastomers are very versatile and are broadly applied due to their flexibility, solvent and wear resistance, highly hydrophobic nature, high thermal stability, high gas permeability, low surface tension, and chemical and biological inertness amongst other favorable properties. Silicone elastomers, such as in particular polydimethylsiloxane (PDMS), thus find applications as e.g., adhesives, transdermal membranes/patches, dielectric elastomers, and in biomedical applications. Due to the many excellent properties of silicone elastomers, it is of great interest to extend the range of applications and identify elastomers with improved properties for e.g., water handling when in contact with skin and to include inherent drug delivery capabilities.

However, it is also of interest not to alter the inherent properties of silicones in the sense that if they are chemically functionalized by e.g., hydrophilic moieties, some of the characteristics of the silicone matrix disappear. The silicone-glycerol technology allows for a silicone matrix with the initial mechanical properties intact but embeds further functionalization to the system via the embedded glycerol droplets, in the sense that the glycerol-silicone elastomers have significantly improved water handling properties compared to the pristine silicone analogs. This is counterintuitive as the glycerol-silicone elastomers should become more liquid-like with the addition of more liquid glycerol to the system. However, the elastic energy resulting from the surface tension in the emulsified system has a similar magnitude that as of the classical elastic contribution from the elastomer/adhesive.

Patent publications in this technical field include US 2001/016609, CN 101747630 A, JP 2007 106946 A, CN112795196A, US20190060211A1, US 2023/0090479, CN107868471B and WO2016189117.

Non-patent literature in this technical field includes:
J.D. Eshelby: The force on an elastic singularity. Philosophical Transactions of the Royal Society of London. Series A, Mathematical and Physical Sciences, 1951, 244, 87.
P. Mazurek, S. Hvilsted, A.L. Skov: Green silicone elastomer obtained from a counterintuitively stable mixture of glycerol and PDMS. Polymer, 2016, 87, 1.
V. Chiuala, P. Mazurek, J. Eiler, A.C. Nielsen, A.L. Skov: Glycerol-silicone adhesives with excellent fluid handling and mechanical properties for advanced wound care applications. Int. J. Adhes. Adhes., 2020, 102, 102667.
P. Mazurek, B.E.F. Ekbrant, F.B. Madsen, L. Yu, A.L. Skov: Glycerol-silicone foams - Tunable 3-phase elastomeric porous materials. Eur. Polym. J., 2019, 113, 107.
P. Mazurek, M.A. Brook, A.L. Skov: Glycerol -silicone elastomers as active matrices with controllable release profiles. Langmuir, 2018, 34, 11559.

There is a continued need for cured silicone products with improved properties, in which the kits used for forming such products are storage stable for extended periods.

### SUMMARY

A storage-stable, curable two-part kit is thus provided. The kit comprises:
- a first part (A) comprising a first crosslinkable polysiloxane polymer, a curing catalyst and glycerol, wherein said glycerol is in the form of discrete droplets uniformly distributed in said first part,
   and
- a second part (B) comprising a crosslinker for said first polysiloxane polymer.

When the first and second parts are mixed, a curing reaction takes place between at least the first polysiloxane polymer and the crosslinker, promoted by said curing catalyst, so as to form a cured silicone product.

The kit as set out above has an unexpectedly long storage lifetime, often many months.

A process for providing a cured silicone product is also provided, said process comprising:
- providing a first part (A) as described herein,
- providing a second part (B) as described herein,
mixing said first (A) and said second (B) part and allowing the mixture to cure.

Further aspects of the present technology are presented in the following description text, examples, figures and claims.

### LEGENDS

Figure 1. Part A (Example 1) right after preparation with the droplet size of 3.0±0.8 µm.
Figure 2. Part A (from Figure 1) 7 months after preparation with the droplet size of 3.2±0.9 µm.
Figure 3. Part A (Example 2) right after preparation with the droplet size of 2.0±0.3 µm.
Figure 4. Part A (from Figure 3) 6 months after preparation with the droplet size of 2.1±0.4 µm.
Figure 5. Part A (Example 3) right after preparation with the droplet size of 2.0±0.3 µm.
Figure 6. Part A (from Figure 5) 2 months after preparation with the droplet size of 2.4±0.6 µm.
Figure 7. Curing plot of the mixtures in Example 1 directly after preparation and 7 months after preparation at 100 °C for 30 minutes.
Figure 8. Curing plot of the mixtures in Example 2 directly after preparation and 6 months after preparation at 120 °C for 30 minutes.
Figure 9. Curing plot of the mixtures in Example 3 directly after preparation and 2 months after preparation at 100 °C for 30 minutes.
Figure 10. Droplet sizes of S4642A_40phr glycerol_1phrSQO299 emulsion right after preparation according to Example 5.
Figure 11. Droplet sizes of S4642B_40phr glycerol_1phrSQO299 emulsion right after preparation according to Example 5.
Figure 12. Droplet sizes of S4645A_40phr glycerol_1phrSQO299 emulsion right after preparation according to Example 5.
Figure 13. Droplet sizes of S4645B_40phr glycerol_1phrSQO299 emulsion right after preparation according to Example 5.
Figure 14. Cured S4642A&B and S4642A&B_40phr glycerol_1phrSQO299, S4645A&B and S4645A&B_40phr glycerol_1phrSQO299 adhesives (casting gap of 200 µm) after curing at 120 °C for 30 minutes.
Figure 15. Curing plot of S4642A&B and S4642A&B_40phr glycerol_1phrSQO299 mixtures at 120 °C for 30 minutes according to Example 5.
Figure 16. Curing plot of S4645A&B and S4645A&B_40phr glycerol_1phrSQO299 mixtures at 120 °C for 30 minutes according to Example 5.
Figure 17. LVE plot at RT of cured S4642A&B and S4642A&B_40phr glycerol_1phrSQO299 adhesives after curing at 120 °C for 30 minutes according to Example 5.
Figure 18. LVE plot at RT of cured S4645A&B and S4645 A&B_40phr glycerol_1phrSQO299 adhesives after curing at 120 °C for 30 minutes according to Example 5.
Figure 19. Droplet sizes of S4950A_40phr glycerol_1phrSQO299 emulsion right after preparation according to Example 5.
Figure 20. Droplet sizes of S4950A_40phr glycerol_1phrSQO299 emulsion one day after preparation according to Example 5.
Figure 21. Droplet sizes of S4950B_40phr glycerol_1phrSQO299 emulsion right after preparation according to Example 5.
Figure 22. Droplet sizes of S4950 B_40phr glycerol_1phrSQO299 emulsion one day after preparation according to Example 5.
Figure 23. Cured S4950A&B and S4950A&B_40phr glycerol_1phrSQO299 adhesives (casting gap of 200 µm) after curing at 120 °C for 30 minutes.
Figure 24. Curing plot of S4950A&B and S4950A&B_40phr glycerol_1phrSQO299 mixtures at 120 °C for 30 minutes according to Example 5.
Figure 25. LVE plot at RT of cured S4950A&B and S4950A&B_40phr glycerol_1phrSQO299 adhesives after curing at 120 °C for 30 minutes according to Example 5.
Figure 26. Viscosities at 1 s⁻¹ shear rate (Pa.s) according to Examples 7 and 8 for glycerol, glycerol+PEG-200 and glycerol+HAc.
Figure 27. Viscosities at 1 s⁻¹ shear rate (Pa.s) according to Example 7 for S184+glycerol and S184+ (glycerol+ PEG-200).
Figure 28. Viscosities at 1 s⁻¹ shear rate (Pa.s) according to Example 8 for S184+glycerol and S184+ (glycerol+HAc).

### DETAILED DISCLOSURE

### Definitions

In the present context of the invention, the term "silicone product" refers to a product formed by crosslinking/curing a polysiloxane polymer. "Silicon products" include gels, adhesives, elastomers, and rubbers. A "silicone elastomer" is a silicone product in accordance with the IUPAC definition as a polymer that displays rubber-like elasticity.

In the present context the term "polysiloxane" refers to a compound of the form [RR'SiO]n, wherein R and R' are identical or different hydrocarbon groups, and wherein n is the number of repeating units. The term "polysiloxane" also refers to a compound of the form [RR'SiO]n, which may be partly functionalized in the sense that some R, R' groups have been replaced by or substituted with substituent groups. Non-limiting examples of such substituent groups include Cl, CN, F, S, NH₂, OH, phenyl, benzo derivatives, alkenyl, and alkynyl, either directly attached to the Si atom on the silicone backbone or connected to the Si atom via a short aliphatic chain (1-4 carbon atoms).

In addition, silicone compounds or silicone prepolymers or additives used for crosslinking may include functional groups known in the art, including compounds comprising SiH, SiOR, Si-vinyl, Si-allyl, Si-oxime, and Si-carboxylate functions.

In the present context the term "polydimethylsiloxane", abbreviated "PDMS", refers to a compound of the formula CH₃[Si(CH₃)₂O]ₙSi(CH₃)₃, where n is the number of repeating units. The term "polydimethylsiloxane" encompasses derivatives thereof, wherein one or more methyl groups in PDMS is replaced by, e.g., hydro-, hydroxy-, vinyl-, allyl- groups in a pendant or terminal position.

In the present context, the term "curing" refers to the process of cross-linking of polymer chains. The curing can be thermally or light-induced or may simply take place at room temperature due to the mixing of the two parts of the kit. Curing refers to the elastomer mixture transitioning from a viscoelastic melt to a silicone material with solid-like properties. This means that initially after mixing the melt, it is described by G" > G', where G" is the loss modulus and G' is the storage modulus. After curing, G' > G". The time to reach gelation is an important measure that indicates the time to reach the transition from mainly liquid-like character to mainly solid-like behaviour (i.e. G'=G" in the transition). It is measured via curing profiles where the temperature is kept constant (e.g., 100 °C) and then the development of G' and G" is measured over time. Another measure is the time required to reach the plateau in G', which indicates when the curing has been completed, also often referred to as the curing time.

In the present context, the terms "crosslinker" and "crosslinking agent" are used interchangeably and refer to a chemical compound or compounds facilitating the crosslinking of polymer chains, in particular silicone polymer chains. No particular limitation on the actual composition of the crosslinker or crosslinking agent is to be inferred by the selected language or intended thereby. Examples of a crosslinker or a crosslinking agent may e.g., be a metal, a small molecule, a polymeric crosslinker (e.g., polysiloxane based) or even a crosslinking composition comprising more than one active crosslinker or crosslinking agent involved in the crosslinking process.

In the present context, the term "phr" is an abbreviation for "parts per hundred of the polysiloxane basis", used for describing glycerol content in the compositions corresponding to glycerol weight amount per hundred weight parts of polysiloxane.

In the present context, the term "phg" is an abbreviation for "parts per hundred glycerol", used for describing the content of component, such as excipients or e.g., water and/or a hydrophilic alcohol and/or an ester in the composition and/or surfactant, corresponding to the weight amount of such component per hundred weight parts of glycerol.

In the present context, homogenous means that the glycerol is evenly distributed in the silicone when looking on e.g. a 100 µm × 100 µm microscopy picture, and the composition determined from such image should agree with the overall composition from mixing of the two components.

In the present context, the term "film" has a typical thickness range of about from 0.02 mm to 10.0 mm, such as about from 0.05 mm to 10 mm, such as about from 0.05 mm to 1 mm, such as about 0.1 mm to 5 mm, such as about 0.1 mm to 1 mm, such as about 0.1 mm.

In the present context, the term excipient is used in the sense of an added substance to either a silicone phase or a glycerol phase of the invention. Hence, in the context of the present disclosure, an excipient is a substance comprised in the compositions of the invention additional to either glycerol or silicone. Excipients may e.g., be selected from the group consisting of active substances, in particular active substances for human or animal use, in particular drugs, and/or from catalysts, inhibitors, flow agents, silicone oils, solvents, fillers, blowing agents, reinforcing substances, and plasticizers. Other examples of excipients are given herein below.

In the context of the present invention, an active substance is a substance, which can be released from the compositions of the invention following a release rate of zero or higher orders as detailed herein. Mainly, active substances are substances, which upon their release from the compositions of the invention are chemically and/or biologically active at a surface or in a human or an animal body, such as pharmacologically active ingredients and/or drugs.

In the context of the present invention, a sprayable composition is a formulation that can be sprayed by various conventional methods, such as by simple laboratory sprays with no additional pressure or by pressurized systems such as aerosol-creating or aerosol-containing systems or others. Sprayable compositions be diluted by various means, for example, using solvents, oils, or other excipients to dilute the viscosity of the silicone phase.

In the context of the present invention droplet size and droplet dispersity refers to the average droplet size and the standard deviation, respectively. The droplet size is ideally between 0.05-10 µm, such as between 0.1-10 µm, between 0.1-5 µm, between 0.5-5 µm, between 1-5 µm, or between 2-3 µm. The dispersity is ideally less than 5 µm, preferably less than 2 µm, more preferably less than 1.5 µm, most preferably less than 0.8 µm.

In the context of the present invention viscosity refers to the dynamic viscosity (in SI units of Pa·s) that is commonly measured in a rheometer in combination with curing studies or by specialized viscosimeters.

In the context of the present invention a diluent of the glycerol phase is a component that is miscible with glycerol and brings down the viscosity of pure glycerol and may be water, ethanol, other low-molecular water-soluble alcohols (e.g. C3-C5 water-soluble alcohols), or low-molecular polyethylene glycol (PEG), or mixtures thereof.

In the context of the present invention, a surfactant is a component that has a hydrophilic and a hydrophobic part in its structure, thereby acting to reduce the interfacial tension between two immiscible components, such as glycerol and silicone. A surfactant can facilitate smaller droplets to become thermodynamically/kinetically favored such that the final silicone product also has smaller droplet size. The surfactant therefore alters the interface between the glycerol and the silicone by having differences in the respective polarities of its two ends, e.g., non-ionic, anionic, cationic, or amphoteric surfactants. Common examples of the preferred nonionic surfactants are short polymers of ethylene oxide or propylene oxide.

By "storage stable" is meant that the elastomer kit retains its original properties and form (in particular in terms of the glycerol droplets) for a period of at least 3 weeks, such as at least 6 weeks, preferably at least 12 weeks.

A "two-part" kit is used to describe a kit of two parts that are stored in separate containers until they are to be mixed.

It has been found by the inventor that extremely stable silicone-glycerol emulsions can be achieved by following a certain mixing process and which furthermore allows for subsequent curing. The resulting product provides a kit of two reactive emulsion/blend parts with at least one part being an emulsion of silicone and glycerol.

The glycerol is either added to one of the parts or to both to give a storage-stable two-component kit, that can subsequently be cured into an elastomer or adhesive without losing the microstructural features of the emulsions (droplet sizes below approximately 4 µm and a low polydispersity in droplet sizes).

A storage-stable, curable two-part kit is thus provided, said kit comprising:
- a first part (A) comprising a first crosslinkable polysiloxane polymer, a curing catalyst and glycerol, wherein said glycerol is in the form of discrete droplets uniformly distributed in said first part,
   and
- a second part (B) comprising a crosslinker for said first polysiloxane polymer.

When the first and second parts are mixed, a curing reaction takes place between at least the first polysiloxane polymer and the crosslinker, promoted by said curing catalyst, so as to form a cured silicone product. To avoid crosslinking of the first part (A) alone, the first part (A) should not comprise a crosslinker for the first polysiloxane polymer.

The first part (A) of the two-part kit comprises a first crosslinkable polysiloxane polymer, which is preferably a polydimethylsiloxane. The first part (A) further comprises a curing catalyst. The first part (A) further comprises glycerol, wherein said glycerol is in the form of discrete droplets uniformly distributed in said first part. Suitably, the concentration of the glycerol in said first part (A) is 15 to 160 phr of the total amount of polysiloxane polymer in said first part (A).

The second part (B) may also comprise glycerol in the form of discrete droplets uniformly distributed in said second part (B). The concentration of the glycerol in said second part (B) is suitably 15 to 160 phr in 100 parts of total amount of any polysiloxane polymer and crosslinker in said second part (B).

It has been found that good storage stability of the kit is achieved with a small, uniform droplet size of the glycerol in part (A). The average droplet diameter of the discrete droplets of glycerol in part (A) and/or part (B) may therefore be below 10 µm, such as between 0.05-10 µm, such as between 0.1-10 µm, between 0.1-5 µm, between 0.5-5 µm, between 1-5 µm, or between 2-3 µm. Additionally, the standard deviation of the average droplet diameter of glycerol in part (A) and/or part (B) is less than 5 µm, preferably less than 2 µm, more preferably less than 1.5 µm, most preferably less than 1.0 µm.

The concentration of the glycerol in the cured silicone product is suitably between 10 to 160 phr, preferably between 15 to 160 phr of said cured silicone product.

In one aspect, the cured silicone product is an adhesive and the weight ratio of part A to part B (A:B) is in the range 1:0.5 to 0.5:1, preferably 1:0.75 to 0.75:1, more preferably about 1:1. In this aspect, the silicone phase of part A may be stabilized with a silicone resin of type Q or MQ, preferably a silanol-trimethylsilyl modified Q resin, in a concentration of 0.5-3 phr. Also, within this aspect, the glycerol is typically loaded with a gelation agent or an active substance, preferably in an amount of 5-50 phg.

In another aspect, the cured silicone product is an elastomer and the weight ratio of part A to part B (A:B) is in the range 8:1 to 12:1, preferably 11:1 to 9:1, more preferably about 10:1. In this aspect, the two-part kit may further comprise a non-reactive silicone oil, preferably in a concentration from 5-10 phr, in part A and/or in part B, preferably in part A.

In the two-part kit described herein, the dynamic viscosity of the first part (A) - prior to addition of glycerol - is suitably greater than the dynamic viscosity of the second part (B) before the addition of glycerol to one or both parts. The viscosities are measured by standard rheological measurements where the liquid component is placed between two parallel plates (10 or 25 mm diameter) with a gap size of the order of 1 mm in a shear rheometer. A frequency sweep is conducted, and the viscosity is provided by the rheometer. The rheometer may be any conventionally used instrument, such as TA Instruments Discovery HR-1.

Normally, a person skilled in the art of formulation will target to prepare a formulation consisting of two parts with similar viscosities to increase the ease and reliability at which the mixer can mix the two components. For silicone elastomer/adhesive formulations, the crosslinker-containing part usually becomes significantly less viscous since the crosslinker almost always is of much lower molecular weight than the polymer (the viscosity of polymers scale with the molecular weight to a power of around 2.4 as a rule of thumb). Therefore, it would also be the logical step to include the glycerol in the crosslinker-containing part, both due to the ease of emulsifying the glycerol in the silicone but also due to the reduced difference in the resulting parts A and B. However, it has been found that the emulsions are much more stable when prepared by mixing glycerol into the high-viscosity silicone part. And the emulsified glycerol droplets remain stable when the final mixing of parts A and B are conducted, despite the significant viscosity difference of parts A and B with part A (containing glycerol) being significantly more viscous than part B.

In one aspect, the first part (A) of the two-part kit has a dynamic viscosity in the range of 1-100 Pa·s, preferably 1-40 Pa·s, more preferably 2-30 Pa·s.

In one aspect, part A of the kit comprises a vinyl-functional polysiloxane polymer (e.g., a vinyl-functional PDMS polymer) while part B of the kit comprises a hydride-functional crosslinker. The hydride-functional crosslinker typically comprises two or more Si-H functional groups. The hydride-functional crosslinker may be a Si-H functional polysiloxane polymer comprising two or more Si-H functional groups. Addition curing takes place between the vinyl-functional polysiloxane polymer and the hydride-functional crosslinker and is typically catalysed by a transition metal catalyst, e.g., a Pt catalyst. The skilled person will select crosslinkable polymer, crosslinker and appropriate catalyst to achieve the desired addition curing process and the desired properties of the cured silicone product.

Each of the parts (A/B) of the kit may comprise additional polysiloxane components, which may become integrated in the polysiloxane matrix of the cured silicone product, as long as the additional polysiloxane components do not begin to cure prior to mixing parts A and B. For example, the first part (A) may comprise more than one crosslinkable polysiloxane polymer component. Commercial elastomer compositions also commonly entail silica fillers and resins, where the exact composition and type are proprietary knowledge.

Additionally, the second part (B) may further comprise a second crosslinkable polysiloxane polymer, such that when the first and second parts are mixed, a curing reaction takes place between at least the first polysiloxane polymer, the second crosslinkable polysiloxane polymer and the crosslinker, promoted by said curing catalyst, so as to form said cured silicone product.

Suitably, the curing catalyst is a Pt-curing catalyst and is present in the two-part kit in an amount of 5-30 ppm, preferably 5-10 ppm.

Parts A and B may comprise additional components such as solvents, reinforcing inorganic fillers such as silica or resins (such as Vinyl Q resins from Gelest Inc). Such additional components may be mixed into part A or part B, or both part A and part B, or may be added to the kit during mixing. The amounts of additional components necessary will vary widely depending on the composition in question but usually is in the range 0-40% by weight, such as 5-30% by weight, such as 10-25% by weight of the final cured silicone product.

In an embodiment of the invention the SQO299 resin from Gelest is used to stabilize emulsions that are elsewise not stable. It is used in concentrations of 0.2-2 phr for optimum performance.

In an embodiment of the invention the two-part kit comprises at least one blowing agent. The at least one blowing agent is suitably present in an amount in the range 1-10 phr, such as 1-5 phr, such as 2-4 phr, such as about 3 phr. The blowing agent may be a base or an acid. Non-limiting examples thereof include inorganic bases such as NaOH and KOH, strong acids, such as HCl, or bicarbonate or organic acids such as acetic acid or lactic acid.

In an embodiment the two-part kit further comprises one or more additives entailing cosmetical actives or drugs that are either mixed beforehand with the glycerol part(s) or mixed directly into the given A or B parts when preparing the glycerol-silicone emulsion. This type of additives are to be released when the product is in contact with water. Depending on the additive in question and its hydrophilic/hydrophobic properties said additive will be present either in solution or dispersion in the glycerol droplets or in the silicone matrix or in both. Ideally, the actives are fully present in the glycerol droplets. This is inherent for hydrophilic components, but for hydrophobic components, this may be facilitated by mixing the active with a surfactant before mixing with the glycerol phase.

The one or more additives may be selected from the group consisting of colouring substances, active pharmaceutical substances as defined above. One or more additives may be added in order to impart particular properties to the cured silicone product, such as in order to provide e.g., therapeutical properties, or in order to allow controlled release of an active pharmaceutical substance. The additives may be mixed directly into the A and/or B parts when preparing the glycerol-silicone emulsion; alternatively, the additives may be first mixed with the glycerol part(s) and then subsequently may be added to the glycerol-silicone emulsion. Preferably, the additives are present in the glycerol droplets. This would inherently happen for hydrophilic components, but for hydrophobic components, this may be facilitated by mixing the additive with a surfactant before mixing in with the glycerol phase(s).

A process for providing a cured silicone product is described, said process comprising:
- providing a first part (A) as defined herein,
- providing a second part (B) as defined herein,
- mixing said first (A) and said second (B) part and allowing the mixture to cure.

In one aspect of the process, the cured silicone product is in the form of a thin film on a substrate, and wherein said process comprises the additional step of coating mixed first (A) and second (B) parts on said substrate prior to curing.

While the invention has been described with reference to a number of embodiments and aspects, the overall scope of the invention is defined in the appended claims. The skilled person may combine embodiments and aspects as required, within the scope of the invention. All documents mentioned herein are incorporated by reference.

### EXAMPLES

### 1.1 Materials

SILPURAN^{®} 2130 A/B (abbreviated as S2130) and SILPURAN^{®} 2114 A/B (abbreviated as S2114) were supplied from Wacker, which are the two-component addition-curing silicone composition, curing to a silicone adhesive. The platinum catalyst is contained in component A and the crosslinker is contained in component B. Mass mix ratio between component A and component B is 1:1 as recommended by the manufacturer.

SYLGARD^{™} 184 (abbreviated as S184) was supplied from DOW, which is the two-component addition-curing silicone composition curing to a silicone elastomer. The platinum catalyst is contained in component base and the crosslinker is contained in component curing agent. Mass mix ratio between base and curing agent is 10:1 recommended by the manufacturer.

Silbione^{®} RT Gel 4642 (abbreviated as S4642) and Silbione^{®} RT Gel 4645 (abbreviated as S4645) were supplied by Elkem and is a two-component addition curing silicone composition curing to an adhesive. The recommended mixing ratio is 1:1 however other suitable ratios are also possible. It is a high-tack silicone "adhesive" (often termed "gel") designed to bond strongly on polyurethane films without any primer or surface treatment.

Silopren Gel 4950 (abbreviated as S4950) was supplied by Momentive and is a two-component addition curing silicone composition curing to an adhesive. The mixing ratio is 1:1 recommended by the manufacturer.

Glycerol (Glycerin Ph. Eur., USP, BP) was purchased from VWR. SQO299 resin was supplied by Gelest Inc. Poly(ethylene glycol) (PEG-200) was supplied from Sigma-Aldrich. Hyaluronic acid (Blanova^{®} Active Sodium Hyaluronate (8-50 kDa)) was supplied by Azelis.

All chemicals were used as received.

### 1.2 Equipment

A dual asymmetric centrifuge speedmixer (DAC 150.1 FVZ-K, Synergy Devices Ltd, UK) was used for mixing of all compounds.

An optical microscope (DM LB, Leica Microsystems GmbH, Germany) equipped with a Leica MC190 HD camera was applied for investigation of glycerol in silicone emulsion morphology.

A strain-controlled shear rheometer (Hybrid Rheometer, TA Instruments Discovery HR-1, USA) was used to observe time-resolved dynamic-mechanical curing profile of the silicone mixtures as well as to determine the viscosities of the various components.

The materials and equipment of Example 1 were used in subsequent experiments and the below Examples.

### Example 1: Adhesive formulated into a two-component system

5 g part A from SILPURAN^{®} 2130 (S2130A) and 4 g glycerol were added together in a clean 25 mL speedmix container, the mixture was firstly hand mixed with a metal scraper for 30 seconds, then was speed mixed at 3500 rpm for 2 minutes using a speedmixer until a homogeneous part A was obtained (abbreviated as S2130A_80phr (parts per hundred rubber) glycerol). 5 g part B from SILPURAN^{®} 2130 (S2130B) was weighed as part B.

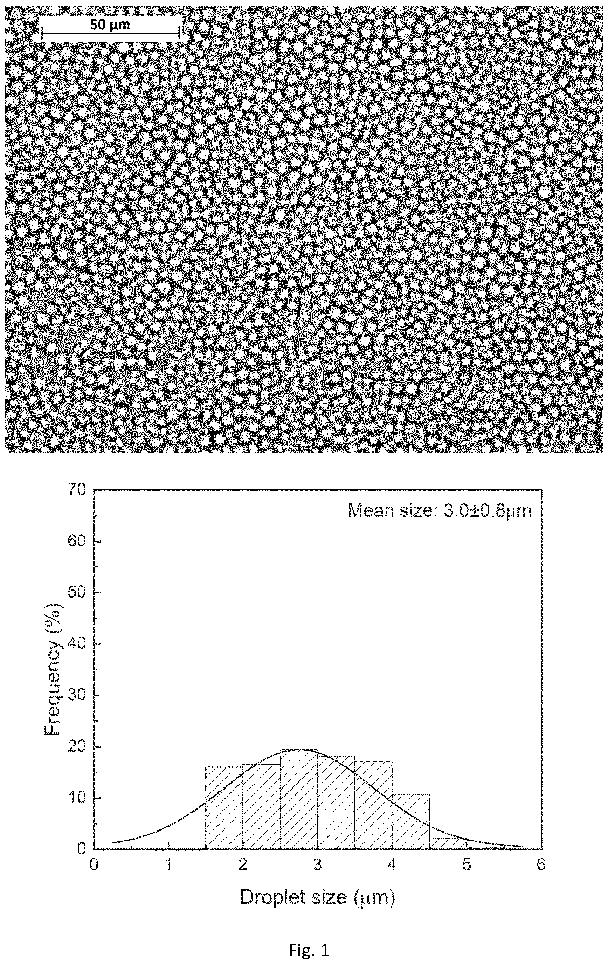

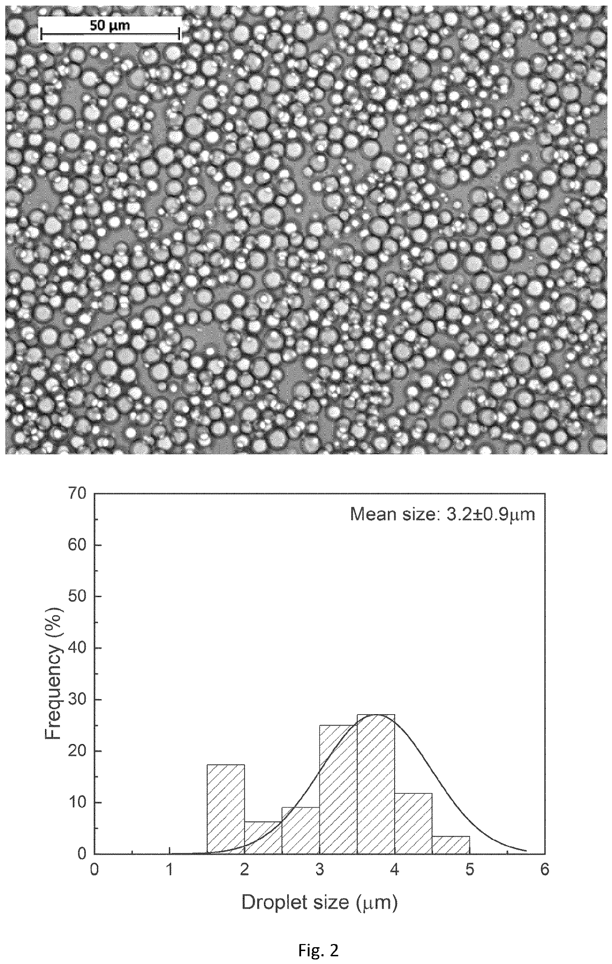

Figures 1 and 2 show part A right after preparation (Figure 1) with the droplet size of 3.0±0.8 µm and 7 months after preparation (Figure 2) with the droplet size of 3.2±0.9 µm. The size distribution of all the droplets in the microscope image is analyzed by the image-processing tool ImageJ.

### Example 2: Achieving stable emulsions by gradually adding more and more glycerol to the part with catalyst (part A)

5 g SILPURAN^{®} 2114 part A (S2114A) and 2 g glycerol were added together in a clean 25 mL speedmix container, the mixture was first hand mixed with a metal scraper for 30 seconds, then was speed mixed at 3500 rpm for 2 minutes using a 13 speedmixer until a uniform emulsion was achieved. Afterwards, 1g glycerol was added into the emulsion, the mixture was again first hand mixed for 30 seconds, then was speed mixed at 3500 rpm for 2 minutes using a speedmixer until uniform. After that, another 1 g glycerol was added into the resulting emulsion. This mixture was firstly hand mixed with a metal scraper for 30 seconds, then was speed mixed at 3500 rpm for 2 minutes using a speedmixer until a homogeneous part A was obtained (abbreviated as S2114A_80phr glycerol). 5 g S2114B was weighed as part B. A stable emulsion could not be achieved without the gradual addition of glycerol.

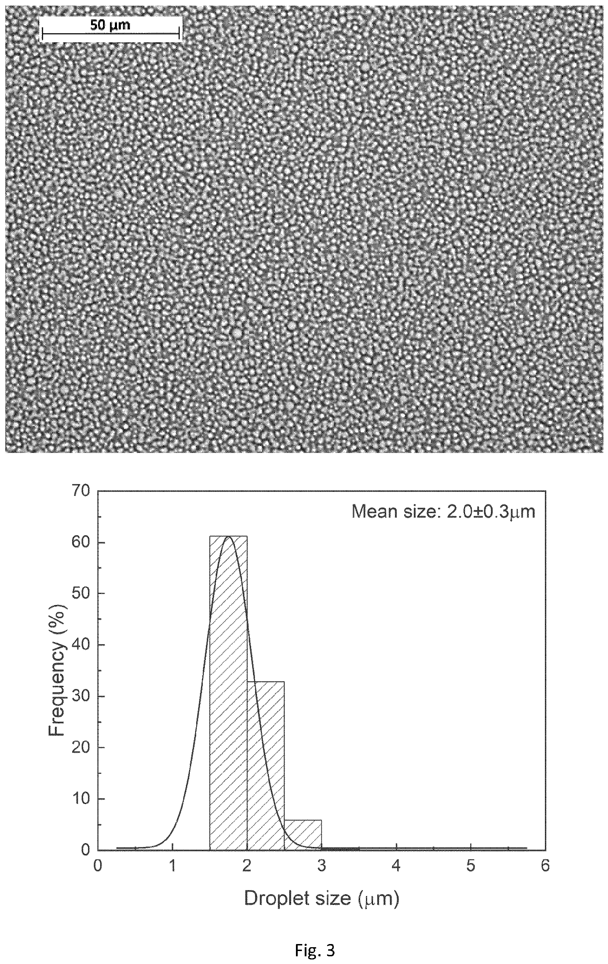

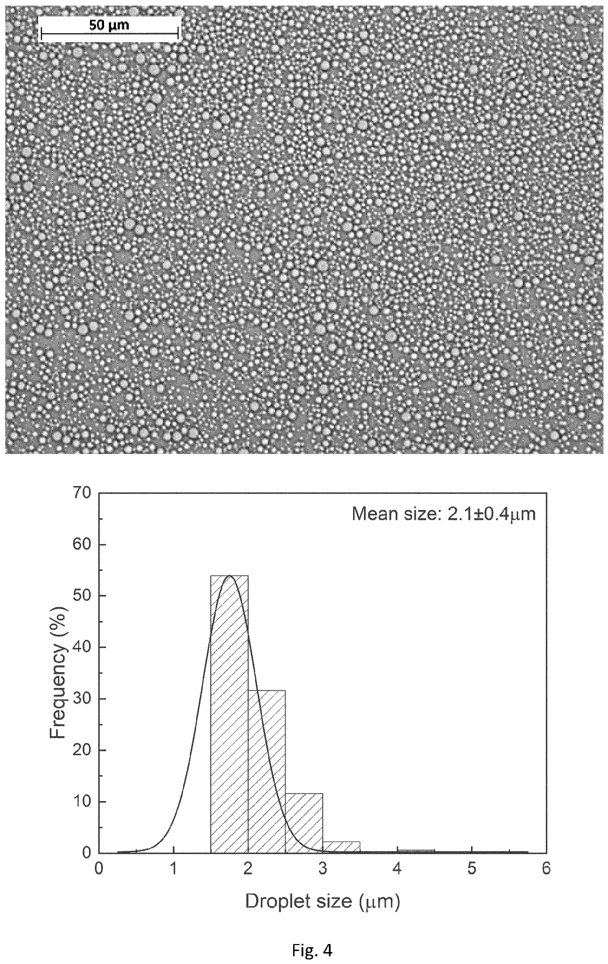

Figures 3 and 4 show part A right after preparation (Figure 3) with the droplet size of 2.0±0.3 µm and 6 months (Figure 4) after preparation with the droplet size of 2.1±0.4 µm, respectively. The size distribution of all the droplets in the microscope image is analyzed by the image-processing tool ImageJ.

### Example 3: Elastomer formulated into a two-component system

10 g Sylgaard 184 (S184) base and 4.4 g glycerol were added together in a clean 25 mL speedmix container, the mixture was first hand mixed with a metal scraper for 30 seconds, then was speed mixed at 3500 rpm for 2 minutes using a speedmixer until a homogeneous part A was obtained (abbreviated as S184 base_44phr glycerol). 1 g S184 curing agent was weighed as part B.

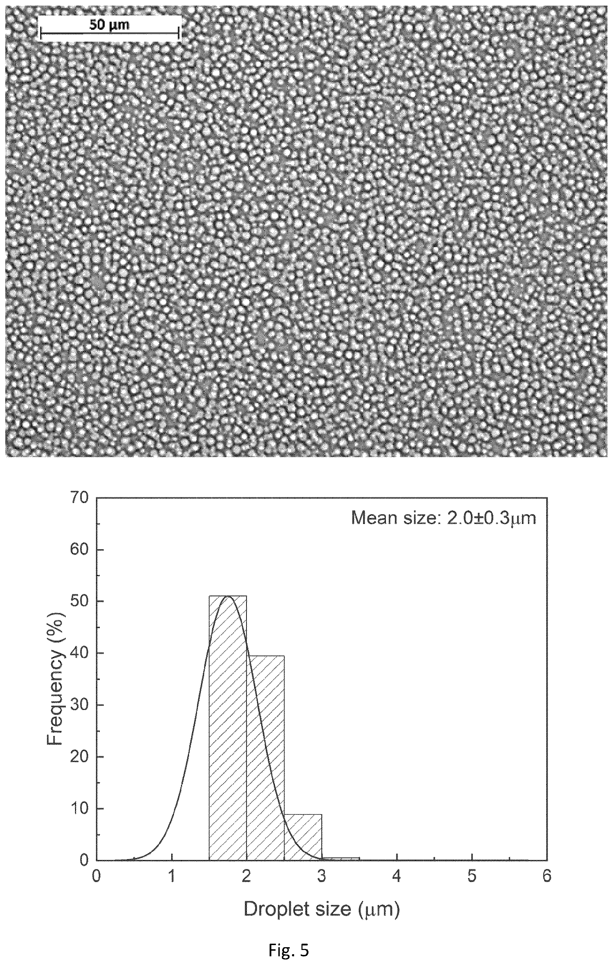

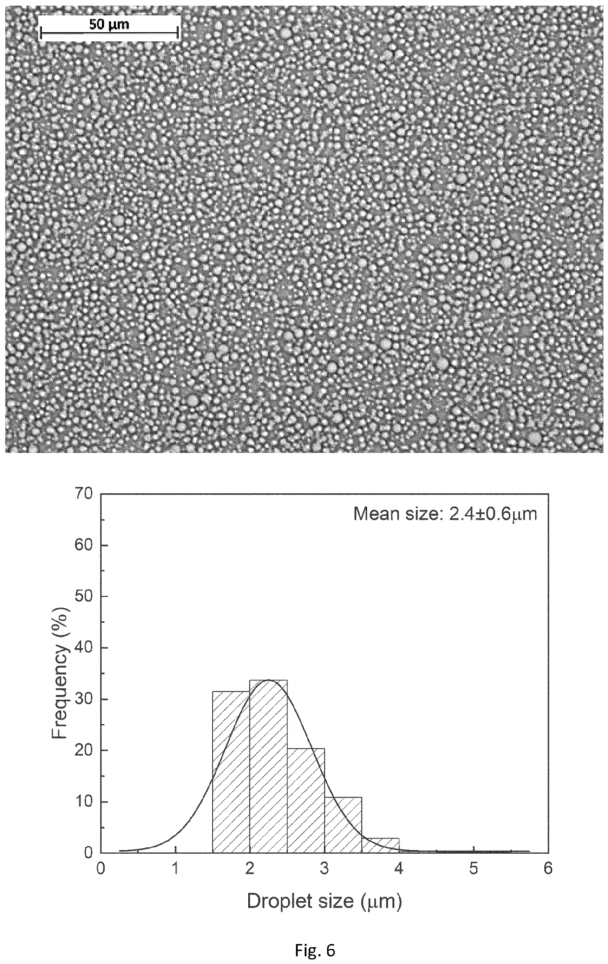

Figures 5 and 6 show part A right after preparation (Figure 5) with the droplet size of 2.0±0.3 µm and 2 months after preparation (Figure 6) with the droplet size of 2.4±0.6 µm. The size distribution of all the droplets in the microscope image is analyzed by the image-processing tool ImageJ.

### Example 4: Curing profile for the mixture of parts A and B in examples 1-3 is not affected after the storage time

5 g SILPURAN^{®} 2130 (S2130B (part B)) was added into the part A prepared as per Example 1. Afterwards the mixture was mixed using a speedmixer at 3500 rpm for 2 minutes until uniform. The curing profile of the above homogeneous mixture was tested by a rheometer at a constant frequency of 0.1 Hz applying a parallel-plate geometry of 20 mm in diameter and a gap of 0.8 mm at 100 °C for 30 minutes.

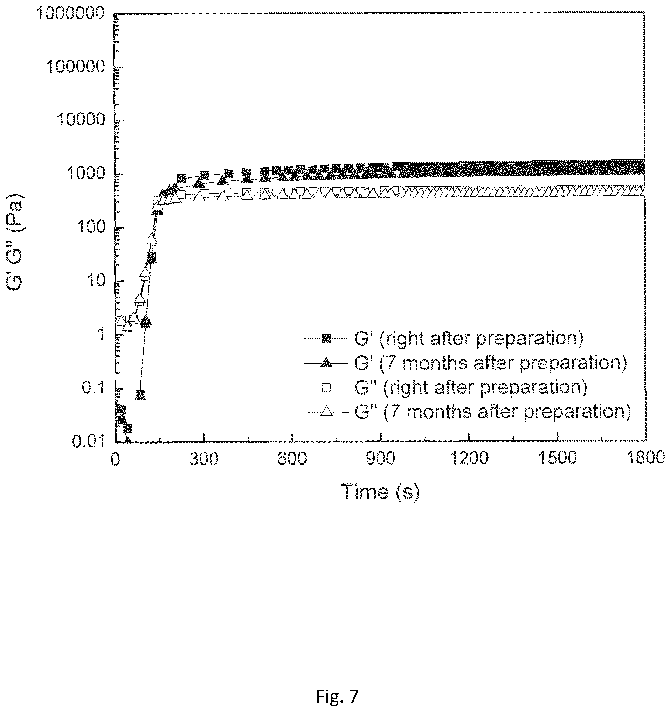

As shown in Table 1, the time to reach the gel point (defined as the point at which the storage modulus G' becomes larger than the loss modulus G" indicating that the fluid has transitioned from fluid-like behaviour to solid/elastic behaviour and the time at which the plateau is reached are almost the same. The curing curves shown in Figure 7 for the mixtures right after preparation and 7 months after preparation are very similar, again indicating the excellent storage stability of the formulation.

**Table 1. Curing characteristics of the mixtures from Example 1 directly after preparation and after 7 months of storage.**

| Mixture | Time to reach gel point (minute) | Time to reach plateau (minute) |
|---|---|---|
| S2130A&B_40phr glycerol (directly after preparation) | 2.4 | 16.0 |
| S2130A&B_40phr glycerol (7 months after preparation) | 2.5 | 16.3 |

5 g S2114B (part B) was added to part A (prepared according to Example 2). Afterwards the mixture was mixed using a speedmixer at 3500 rpm for 2 minutes until uniform. The curing profile of the above homogeneous mixture was tested by a rheometer at a constant frequency of 0.1 Hz applying a parallel-plate geometry of 20 mm in diameter and a gap of 0.8 mm at 120 °C for 30 minutes.

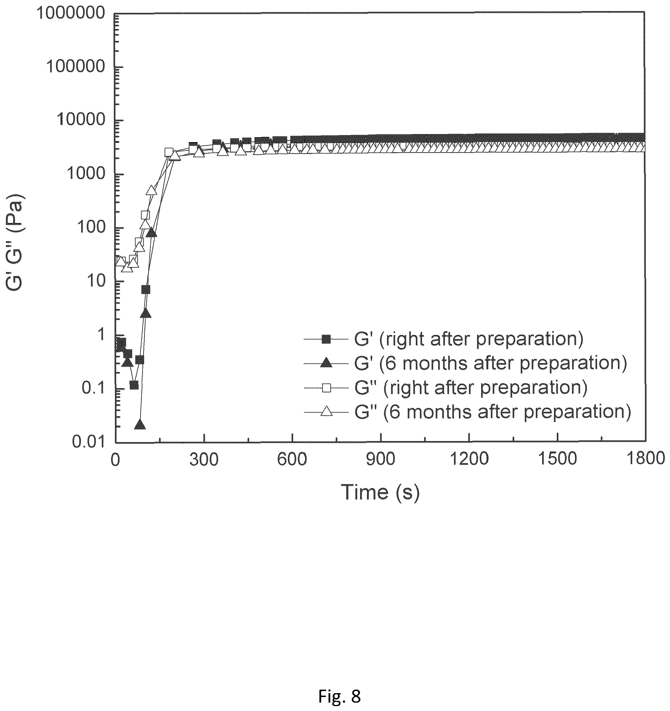

As seen in Table 2, the time to reach the gel point and the plateau, respectively, are similar. The curing curves shown in Figure 8 for the mixtures measured right after preparation and 6 months after preparation look alike and are considered to be identical accounting for experimental uncertainty.

**Table 2. Curing characteristics of the mixtures from Example 2 directly after preparation and after 6 months of storage.**

| Mixture | Time to reach gel point (minute) | Time to reach plateau (minute) |
|---|---|---|
| S2114A&B_40phr glycerol (right after preparation) | 3.3 | 10.2 |
| S2114A&B_40phr glycerol | 3.5 | 12.6 |
| (6 months after preparation) | | |

1 g S184 curing agent (part B) was added into part A (prepared according to Example 3). Afterwards, the mixture was mixed using a speedmixer at 3500 rpm for 2 minutes until uniform. The curing profile of the above homogeneous mixture was tested by a rheometer at a constant frequency of 0.1 Hz applying a parallel-plate geometry of 20 mm in diameter and a gap of 0.8 mm at 100 °C for 30 minutes.

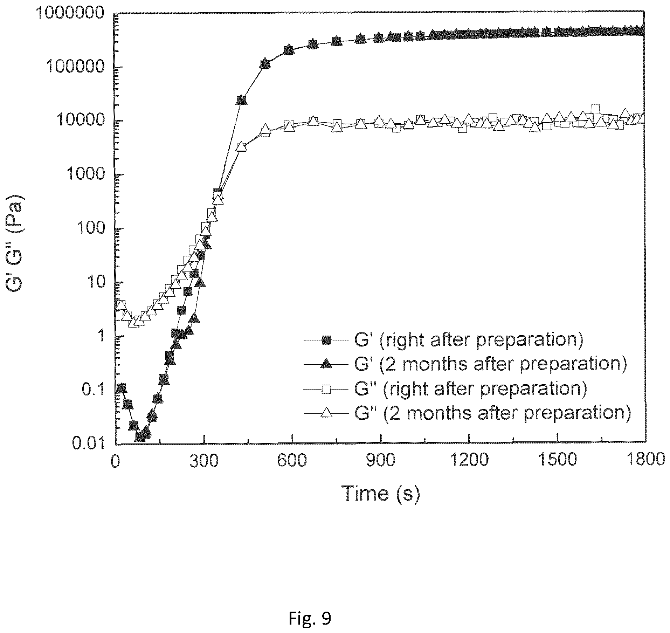

As seen in Table 3, the time at gel point and of plateau are almost the same. The curing curves shown in Figure 9 for the mixtures right after preparation and 2 months after preparation are identical within experimental uncertainty.

**Table 3. Curing characteristics of the mixtures from Example 3 directly after preparation and after 2 months of storage.**

| Mixture | Time to reach gel point (minute) | Time to reach plateau (minute) |
|---|---|---|
| S184 40phr glycerol (right after preparation) | 5.5 | 16.0 |
| S184_40phr glycerol (2 months after preparation) | 5.5 | 16.7 |

### EXAMPLE 5:

### Stabilization of emulsions by a resin: SQO299 resin

For hard-to-stabilize emulsions, a small quantity of SQO299 resin (Gelest Inc) may be added to part A of the formulation to achieve emulsion stability. The structure of the resin is given below: 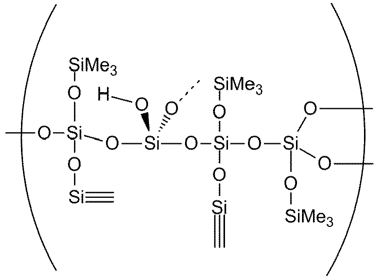 5 g part A from Silbione^{®} RT Gel 4642 (S4642A) and 0.05 g SQO299 resin were added together in a clean 25 mL speedmix container, the mixture was speed mixed at 3500 rpm for 2 minutes until a transparent homogeneous mixture was achieved. Afterwards, 2 g glycerol was added into the above mixture, the mixture was firstly hand mixed with a metal scraper for 30 seconds, then the mixture was speed mixed at 3500 rpm for 2 minutes until uniform part A was obtained (abbreviated as S4642A_40phr glycerol_1phrSQO299).

5 g part B from Silbione^{®} RT Gel 4642 (S4642B) and 0.05 g SQO299 resin were added together in a clean 25 mL speedmix container, the mixture was speed mixed at 3500 rpm for 2 minutes until a transparent homogeneous mixture was achieved. Afterwards, 2 g glycerol was added into the above mixture, the mixture was firstly hand mixed with a metal scraper for 30 seconds, then the mixture was speed mixed at 3500 rpm for 2 minutes until uniform part B was obtained (abbreviated as S4642B_40phr glycerol_1phrSQO299).

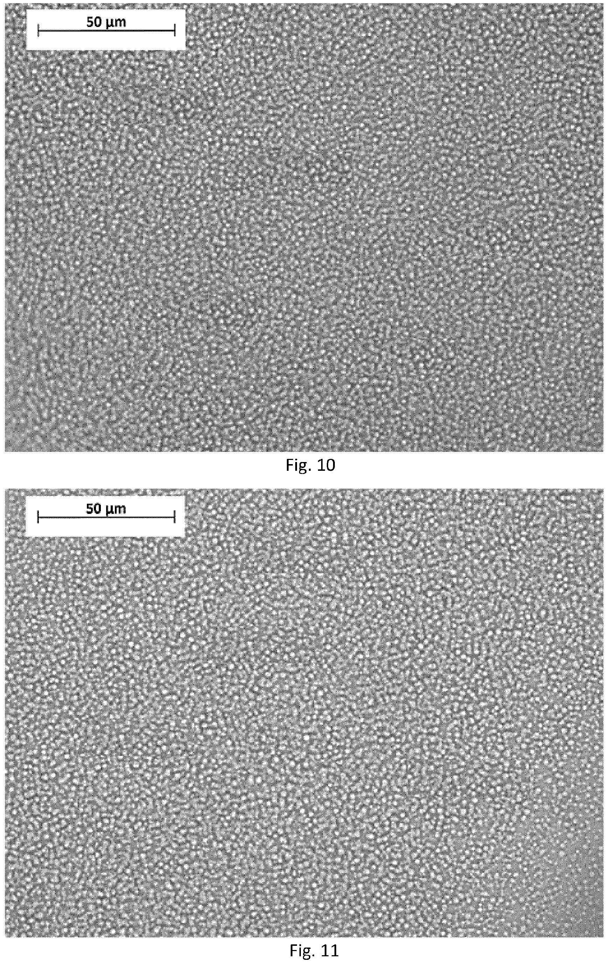

Figures 10 and 11 show the optical microscopic images of S4642A_40phr glycerol_1phrSQO299 emulsion and S4642B_40phr glycerol_1phrSQO299 emulsion right after preparation.

The above uniform part A and part B were added together by the mass mix ratio of 1:1 in a clean 25 mL speedmix container, the mixture was speed mixed at 3500 rpm for 2 minutes until uniform mixture was obtained (abbreviated as S4642A&B_40phr glycerol_1phrSQO299).

5 g S4642A and 5 g S4642B were added together in a clean 25 mL speedmix container, the mixture was speed mixed at 3500 rpm for 2 minutes until uniform mixture was obtained (abbreviated as S4642A&B).

The mixture preparations of S4645A&B_40phr glycerol_1phrSQO299 and S4950A&B_40phr glycerol_1phrSQO299, and S4645A&B and S4950A&B, are the same as S4642A&B_40phr glycerol_1phrSQO299 and S4642A&B.

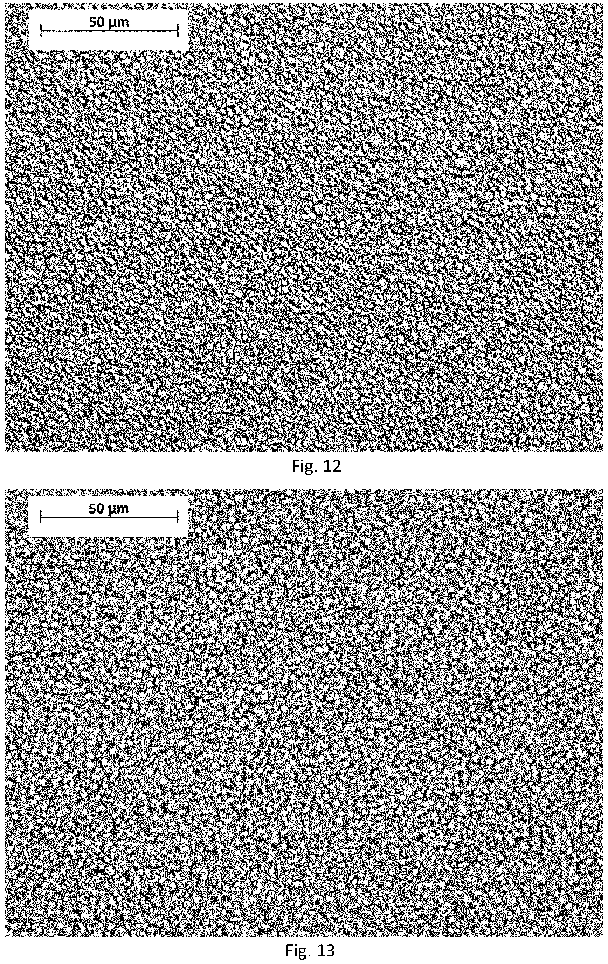

Figures 12 and 13 show the optical microscopic images of S4645A_40phr glycerol_1phrSQO299 emulsion and S4645B_40phr glycerol_1phrSQO299 emulsion right after preparation.

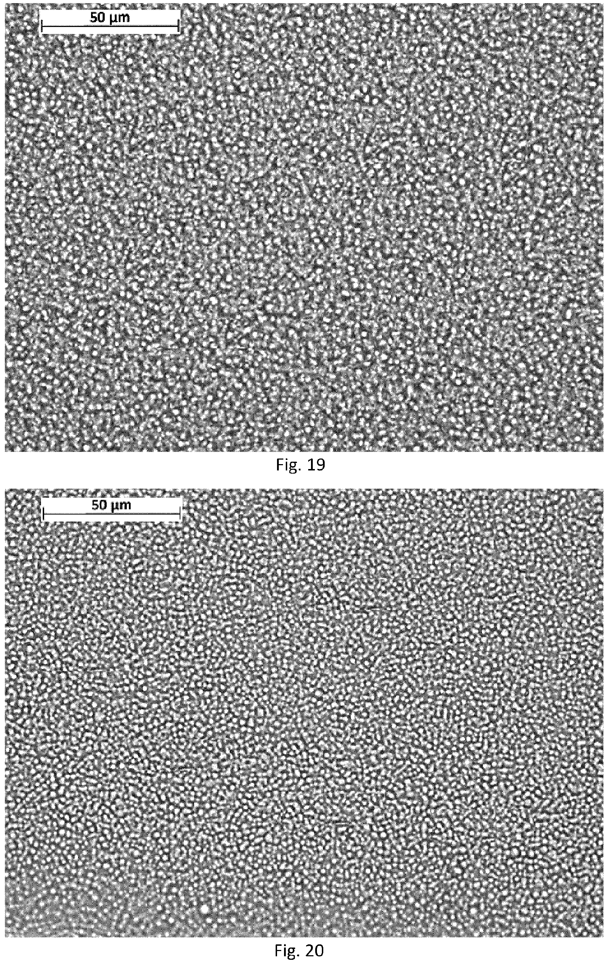

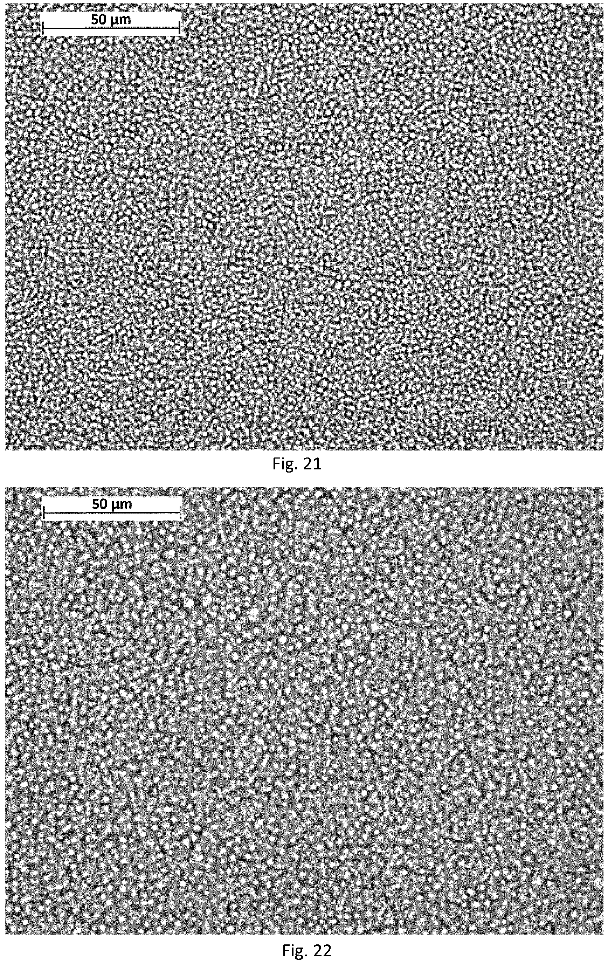

As seen in Figures 19-22, the emulsions in parts A and B (S4950A_40phr glycerol_1phrSQO299 and S4950B_40phr glycerol_1phrSQO299) directly after preparation and after one day are almost the same.

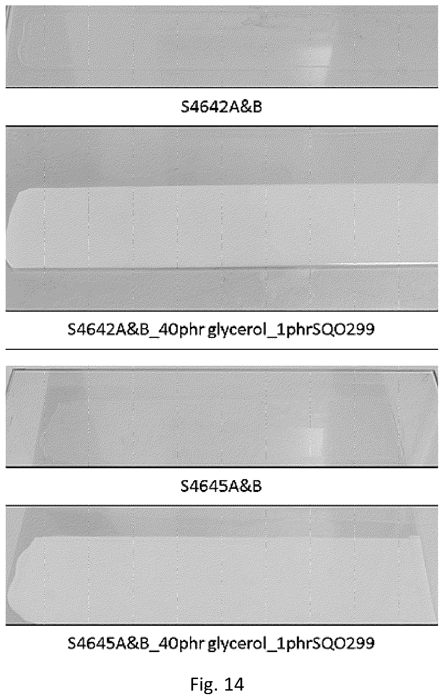

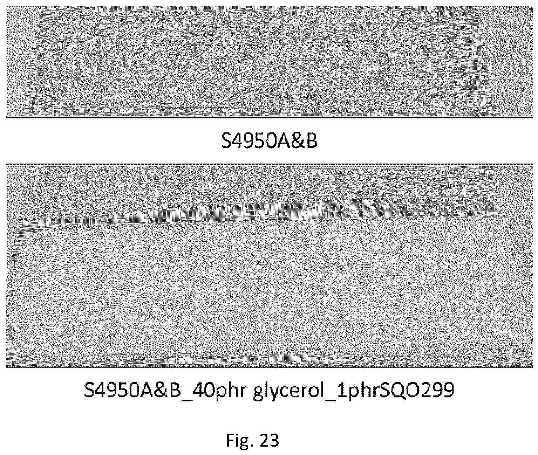

The uniform mixtures thus made were coated on a polyethylene terephthalate (PET) backing (190 µm thick, HOSTAPHAN, Mitsubishi Polyester Film) using a film applicator (3540 bird, Elcometer, Germany) with 200 µm blade gap. Films were fully cured in the oven at 120 °C for 30 minutes. Figures 14 and 23 show the cured adhesives on the PET backing covered by PET release liner (50 µm thick, one surface with fluorosilicone-based coating, Siliconature S.P.A.). These figures show that the formulations can be coated in uniform thickness with homogenous distribution of the glycerol throughout a larger coating area. The films are identical, regardless of whether they are prepared from fresh emulsions or prepared from emulsions stored for several months before the coating process.

The curing profile of the above homogeneous mixtures (A&B_40phr glycerol_1phrSQO299 and A&B) was tested by a rheometer at a constant frequency of 0.1 Hz applying a parallel-plate geometry of 20 mm in diameter and a gap of 0.8 mm at 120 °C for 30 minutes.

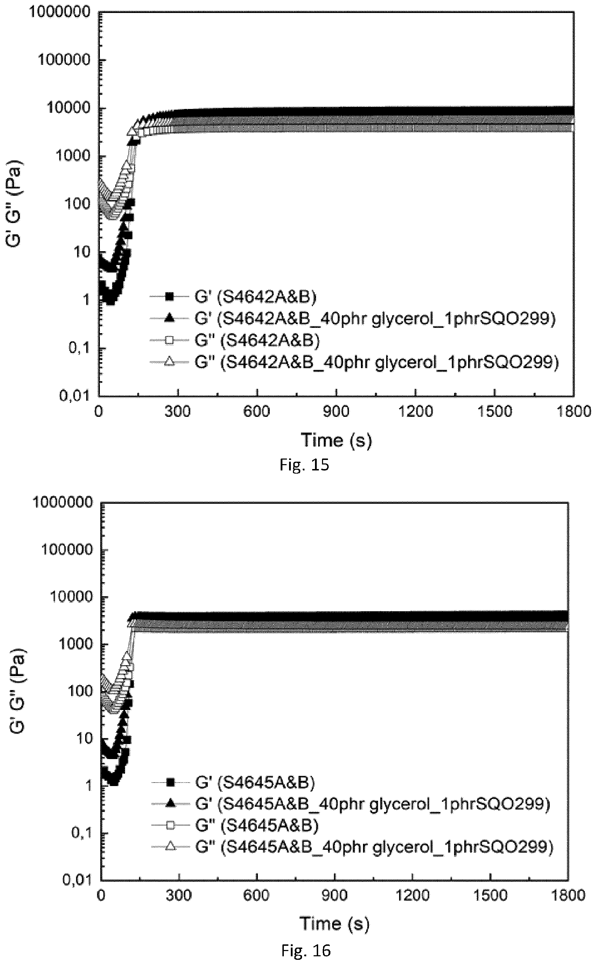

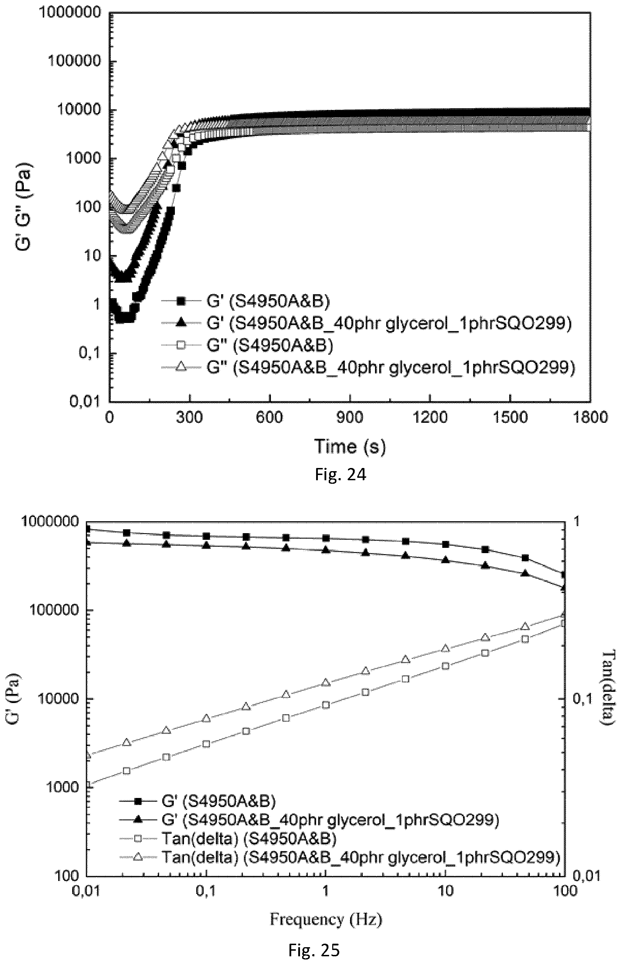

As seen in Table 4, the time at gel point and of plateau for the pristine silicone and silicone-glyceorl-resin mixtures are almost the same. The curing curves are shown in Figures 15, 16 and 24.

**Table 4. Curing characteristics of the mixtures from Example 5.**

| Mixture | Time to reach gel point (minute) | Time to reach plateau (minute) |
|---|---|---|
| S4642A&B | 2.7 | 6.0 |
| S4642A&B_40phr glycerol_1phrSQO299 | 2.5 | 5.7 |
| S4645A&B | 2.1 | 2.4 |
| S4645A&B_40phr glycerol_1phrSQO299 | 2.0 | 2.4 |
| S4950A&B | 9.2 | 22.4 |
| S4950A&B_40phr glycerol_1phrSQO299 | 4.8 | 17.0 |

The linear visco-elastic (LVE) profiles of the silicones (approx. 0.8 mm thick, fully cured at 120°C for 30 minutes) were tested by a rheometer at 23 °C set to 1 % controlled strain mode with a normal force of 0.2 N and in the frequency range 100-0.01 Hz.

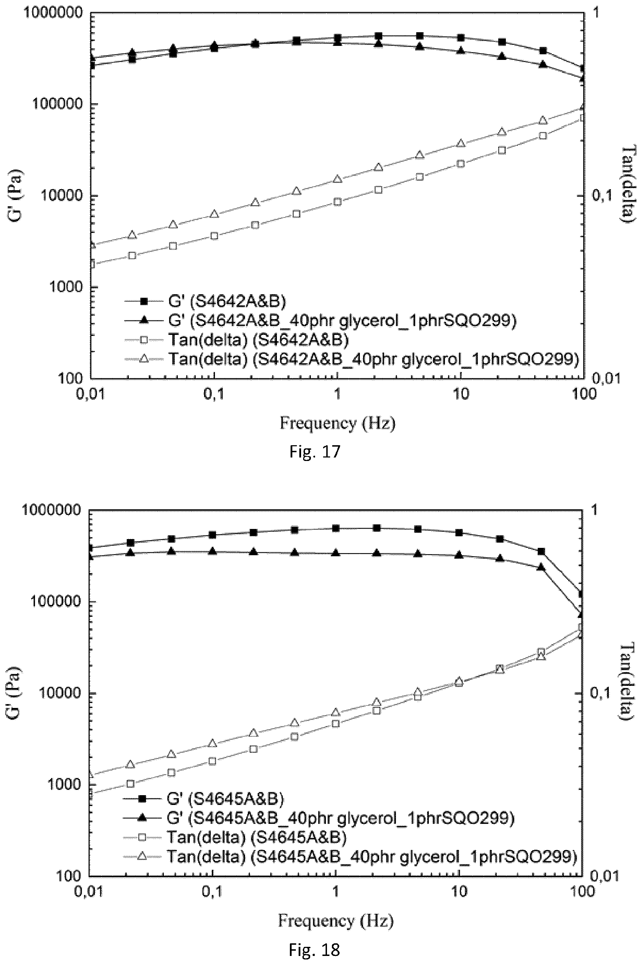

As seen in Table 5, the linear visco-elastic properties for the pristine silicone and silicone-glycerol-resin adhesives are very similar. The LVE curves are shown in Figures 17, 18, and 25.

**Table 5. Linear visco-elastic characteristics of the adhesives from Example 5 with data reported at two characteristic frequencies.**

| Mixture | G'@0.01Hz (Pa) | Tan(δ) @0.01Hz | G'@100Hz (Pa) | Tan(δ) @100Hz |
|---|---|---|---|---|
| S4642A&B | 1772 | 0.51 | 71351 | 0.50 |
| S4642A&B_40phr glycerol_1phrSQO299 | 2889 | 0.57 | 92623 | 0.44 |
| S4645A&B | 793 | 0.62 | 52851 | 0.35 |
| S4645A&B_40phr glycerol_1phrSQO299 | 1281 | 0.56 | 43962 | 0.27 |
| S4950A&B | 1076 | 0.91 | 71215 | 0.50 |
| S4950A&B_40phr glycerol_1phrSQO299 | 2324 | 0.76 | 90308 | 0.42 |

180° peel force test was performed following the ASTM D3330 standards for pressure sensitive adhesives. The above obtained uniform A&B and A&B_40phr glycerol_1phrSQO299 mixtures were coated and cured on polyethylene terephthalate (PET) backing (75 µm thick, HOSTAPHAN, Mitsubishi Polyester Film) at 120 °C for 30 minutes. The approx. 100 µm thick samples were cut in 25 mm × 120 mm rectangles and manually placed onto a stainless-steel plate; a 2 kg weight roller was then used to ensure proper attachment and minimize air inclusion between sample and substrate. Peel tests were performed using an Instron 3340 (Instron, US) universal testing machine equipped with a 50 N load cell. Peel rate and peel angle were set to 5 mm·s⁻1 and 180°, respectively. Three measurements were performed for each composition, and the results were averaged.

As seen in Table 6, the adhesion force for the pristine silicone and silicone-glycerol-resin adhesives are similar.

**Table 6. Adhesion characteristics of the adhesives from Example 5.**

| Mixture | 180° peel test on stainless steel (N/2.5cm) |
|---|---|
| S4642A&B | 0.51±0.02 |
| S4642A&B_40phr glycerol_1phrSQO299 | 0.67±0.03 |
| S4645A&B | 0.79±0.11 |
| S4645A&B_40phr glycerol_1phrSQO299 | 0.36±0.06 |
| S4950A&B | 0.28±0.04 |
| S4950A&B_40phr glycerol_1phrSQO299 | 0.34±0.05 |

### Example 6: Diluents of the glycerol phase: Water added to the glycerol phase

Various amounts of deionized (DI) water were added to glycerol to decrease the initial viscosity of glycerol. The silicone used was S184 component base. The glycerol and DI water were added to a 25 mL container, the mixture was speed mixed at 3500 rpm for 2 minutes until a uniform mixture was obtained. Afterwards, the S184 base was added into the above mixture, the mixture was firstly hand mixed with a metal scraper for 30 seconds, then the mixture was speed mixed at 3500 rpm for 2 minutes until a uniform mixture was obtained. The dynamic viscosities of the mixture were tested with a rheometer with a shear rate of 1 s⁻¹ at 23 °C using a parallel-plate geometry of 20 mm in diameter and a gap of 0.8 mm.

Viscosities of emulsions with 0 to 30% of water dissolved in glycerol and with liquid (glycerol+water) contents varying from 0 to 80 phr were determined and are shown in Table 7. It can be seen that the addition of water reduces the viscosity of glycerol by a factor of approximately 5 when there is added 30 % (30 phg) of water to the glycerol. However, at 30 phg of water, emulsions are only storage-stable up to 40 phg of glycerol whereas pure glycerol in silicone emulsions works above 80 phr.

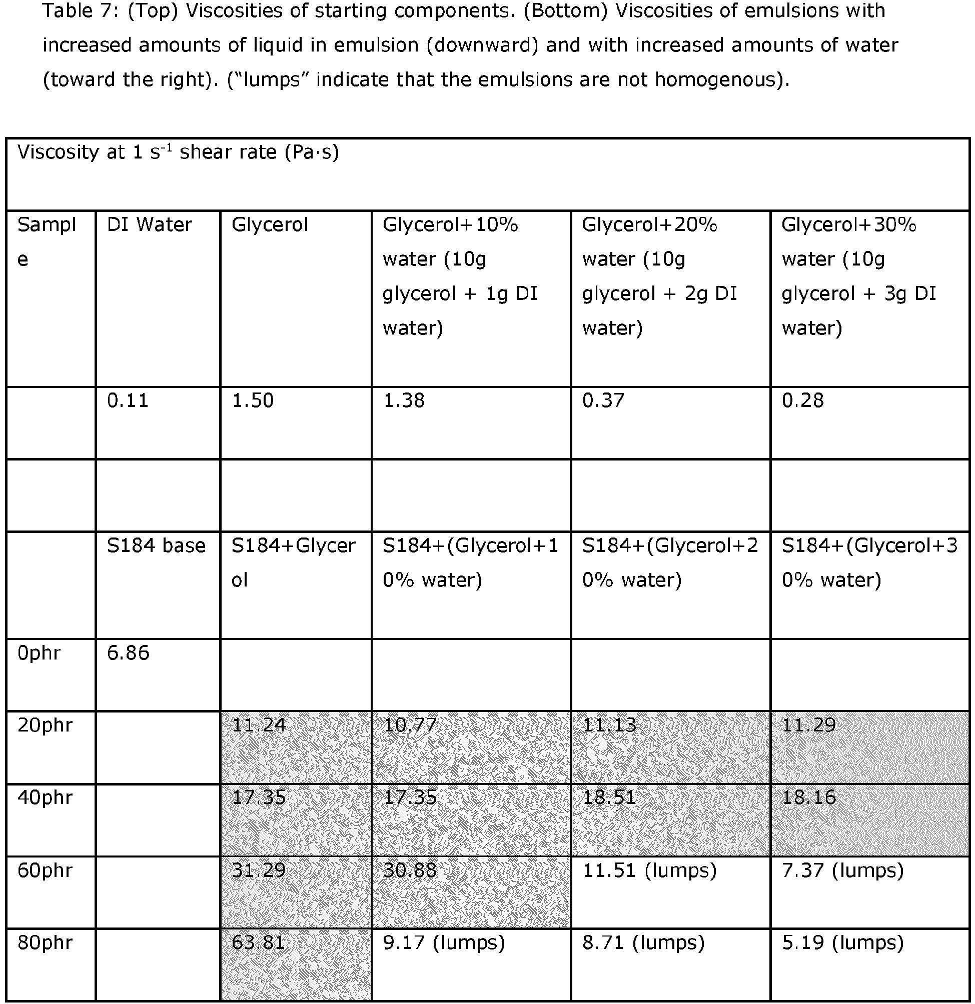

### EXAMPLE 7: Various types of additives to the glycerol phase: Low-molecular-weight polyethylenglycol (PEG). Shaded cells are stable, homogeneous emulsions.

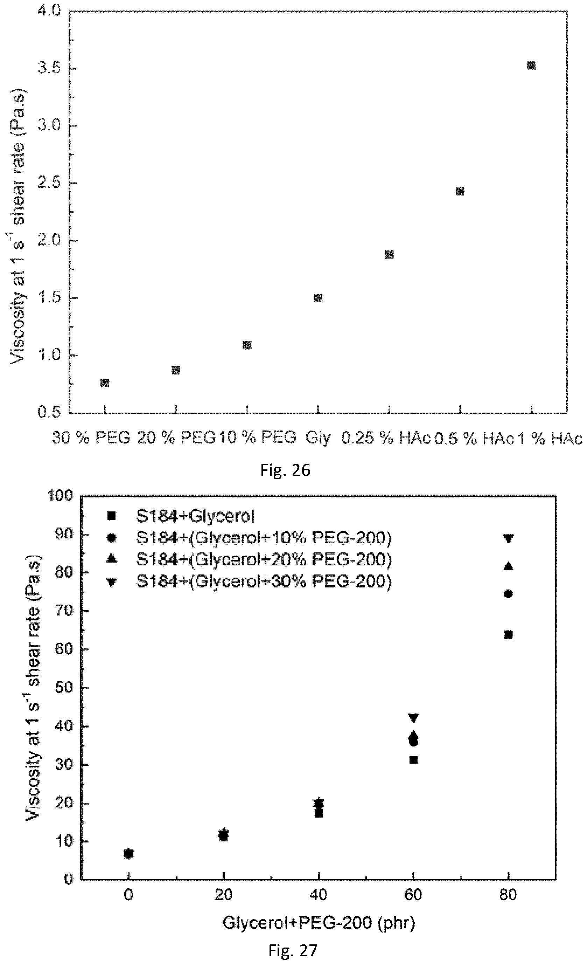

Different additives with various amounts added to glycerol enable to vary the initial viscosity of glycerol, as seen in Figure 26.

Various amounts of PEG-200 were added to glycerol to alter the initial viscosity of glycerol. The silicone used was S184 component base. The glycerol and PEG-200 were added to a 25 mL container, the mixture was speed mixed at 3500 rpm for 2 minutes until a uniform mixture was obtained. Afterwards, the S184 base was added into the above mixture, the mixture was firstly hand mixed with a metal scraper for 30 seconds, then the mixture was speed mixed at 3500 rpm for 2 minutes until a uniform mixture was obtained. The dynamic viscosities of the mixtures were tested with a rheometer with a shear rate of 1 s⁻¹ at 23 °C using a parallel-plate geometry of 20 mm in diameter and a gap of 0.8 mm.

Viscosities of emulsions with 0 to 30% of PEG-200 dissolved in glycerol and with liquid (glycerol+PEG-200) contents varying from 0 to 80 phr were determined and are shown in Table 8 and plotted in Figure 27. It can be seen that the addition of PEG-200 decreases the viscosity of the glycerol-PEG200 mixtures. The resulting emulsions are also stable across 80 phr of liquid and up to 30 phg of PEG-200.

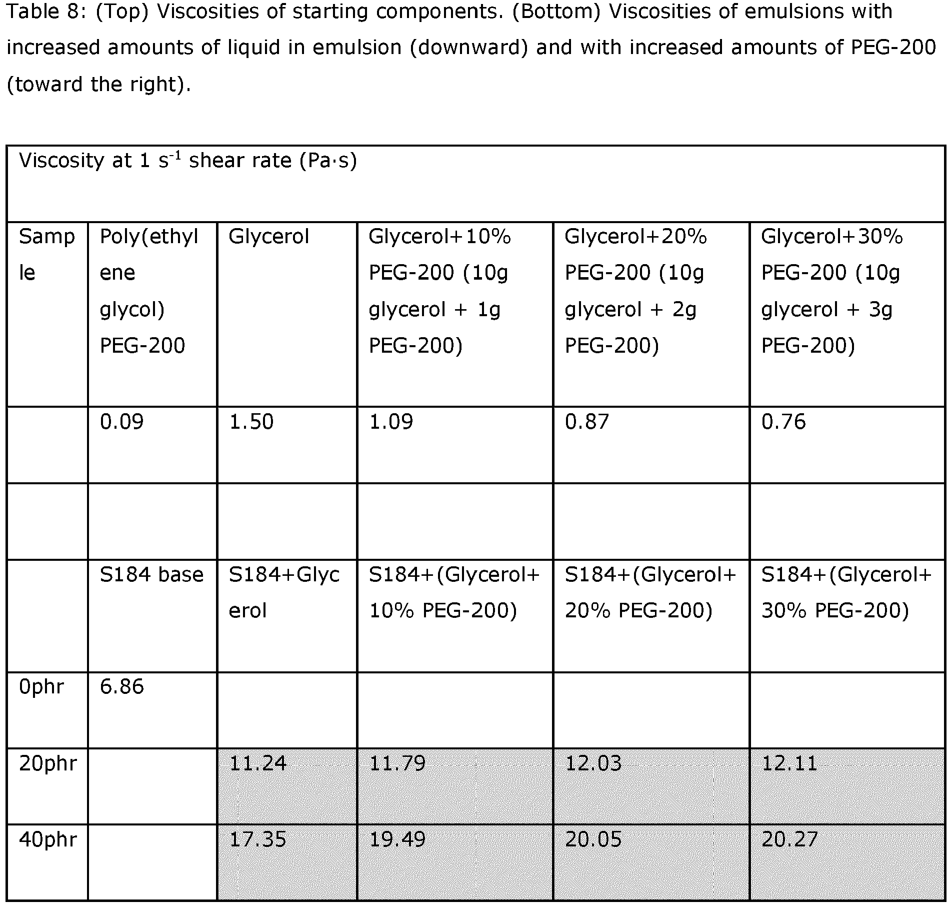

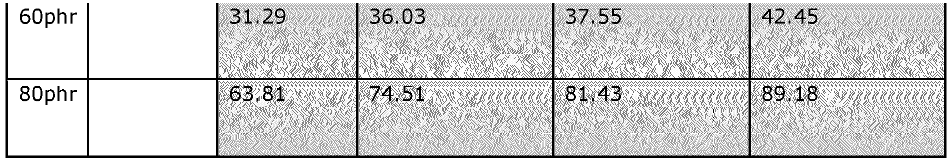

### EXAMPLE 8: Various types of additives to the glycerol phase: hyaluronic acid (abbreviated as HAc, Blanova^{®} Active Sodium Hyaluronate (8-50 kDa)). Shaded cells are stable, homogeneous emulsions.

Various amounts of HAc water were added to glycerol to alter the initial viscosity of glycerol. The silicone used was the S184 "base". The glycerol and HAc were added to a 25 mL container, the mixture was speed mixed at 3500 rpm for 2 minutes until uniform mixture was obtained. Afterward, the S184 base was added into the above mixture, the mixture was firstly hand mixed with a metal scraper for 30 seconds, then the mixture was speed mixed at 3500 rpm for 2 minutes until a uniform mixture was obtained. The dynamic viscosities of the mixture were tested with a rheometer with a shear rate of 1 s⁻¹ at 23 °C using a parallel-plate geometry of 20 mm in diameter and a gap of 0.8 mm.

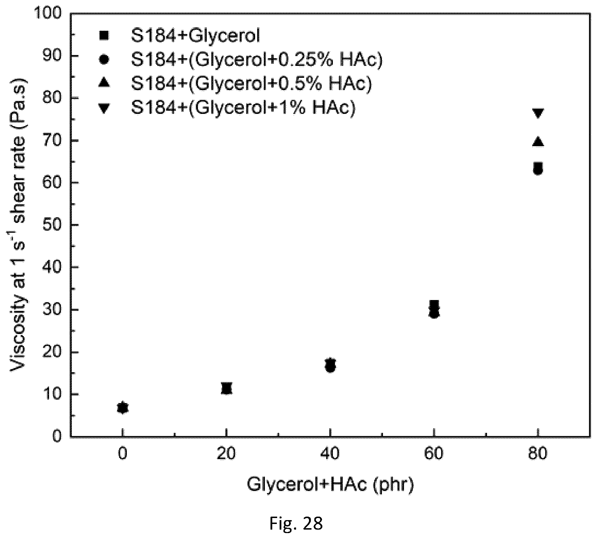

Viscosities of emulsions with 0 to 1% of HAc dissolved in glycerol and with liquid (glycerol+HAc) contents varying from 0 to 80 phr were determined and are shown in Table 9 and plotted in Figure 28. It can be seen that the addition of HAc increases the viscosity of the glycerol-HAc mixtures up to a factor of 2.3 at 1 phg of HAc. However, the viscosities of the resulting emulsions do not follow such a uniform pattern; only for the 80 phr formulations, there is a clear increase of the final viscosity with the HAc loading. All resulting emulsions are also stable across 80 phr of liquid and up to 1 phg of HAc.

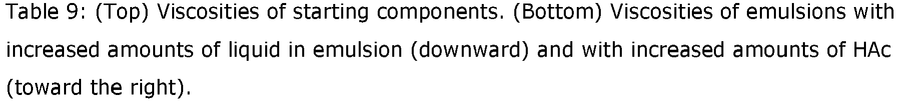

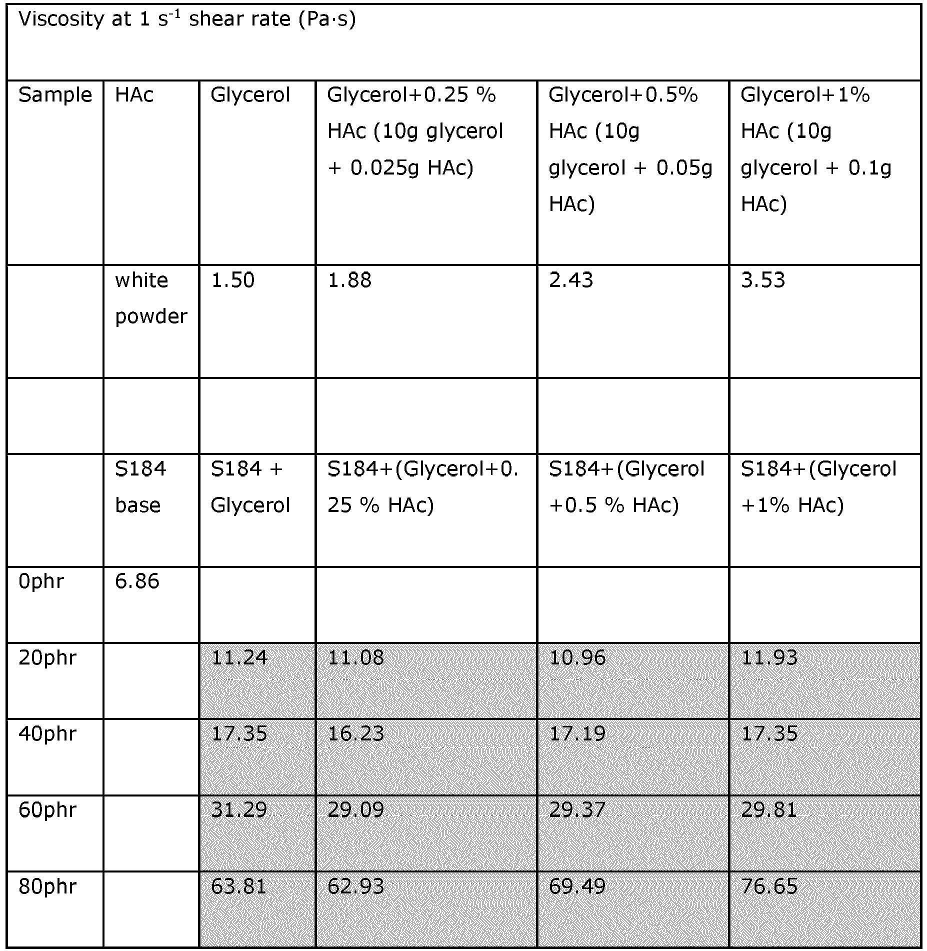

### EXAMPLE 9: Comparative example: mixing of glycerol into the phase that contains the crosslinker (part B)

SILPURAN^{®}2130 part B was mixed with 10, 5, 1, 0.5, and 0.1 phr glycerol, respectively. 10 g part B from SILPURAN^{®} 2130 (S2130B) and glycerol (1g, 0.5g, 0.1g, 0.05g, 0.01g) were added to a 25 mL speedmix container. No additives were added. The mixture was at first hand-mixed with a metal scraper for 30 seconds, and then it was speed mixed at 3500 rpm for 2 minutes using a speedmixer. The emulsions were investigated visually with respect to their overall translucency and if there were clear signs of phase separation. The well-dispersed emulsions are translucent and homogenous in color/translucency over the entire volume.

The 10 phr emulsion showed initial phase separation after approximately 1 minute and continued phase splitting after this time. The 5 phr emulsion was stable for several minutes. The emulsions with lower phr seemed stable but were, on the other hand, not homogeneous.

Higher amounts of glycerol (20, 30, 40 phr) in part B resulted in an immediate and clear distinction between the glycerol phase and the silicone phase after pouring out of the Speedmixer cup.

The same trend with respect to the loading of glycerol and the effect on stability is observed for part B of two other formulations, namely SILPURAN^{®}2114 and SILPURAN^{®}2122 where the emulsions are stable when mixed into part A but not into part B.

Furthermore, adding the SQ resin to part B does not produce stable emulsions for SILPURAN^{®}2130, SILPURAN^{®}2114, and SILPURAN^{®}2122. Both 1 phr and 3 phr of SQ resin were tried without success.

## Claims

1. A storage-stable, curable two-part kit comprising:
• a first part (A) comprising a first crosslinkable polysiloxane polymer, a curing catalyst and glycerol, wherein said glycerol is in the form of discrete droplets uniformly distributed in said first part,
and
• a second part (B) comprising a crosslinker for said first polysiloxane polymer.

2. The two-part kit according to claim 1, wherein, when the first and second parts are mixed, a curing reaction takes place between at least the first polysiloxane polymer and the crosslinker, promoted by said curing catalyst, so as to form a cured silicone product.

3. The two-part kit according to any one of the preceding claims, wherein said first part (A) does not comprise a crosslinker for said first polysiloxane polymer.

4. The two-part kit according to any one of the preceding claims, wherein the concentration of the glycerol in said first part (A) is 15 to 160 phr of the total amount of polysiloxane polymer in said first part (A).

5. The two-part kit according to any one of the preceding claims, wherein said second part (B) further comprises a second crosslinkable polysiloxane polymer, such that when the first and second parts are mixed, a curing reaction takes place between at least the first polysiloxane polymer, the second crosslinkable polysiloxane polymer and the crosslinker, promoted by said curing catalyst, so as to form said cured silicone product.

6. The two-part kit according to any one of the preceding claims, where the first and/or the second polysiloxane is PDMS.

7. The two-part kit according to any one of claims 5-6, wherein said second part (B) further comprises glycerol in the form of discrete droplets uniformly distributed in said second part (B).

8. The two-part kit according to any one of claims 5-7, wherein the concentration of the glycerol in said second part (B) is 15 to 160 phr in 100 parts of the total amount of polysiloxane polymer and crosslinker in said second part (B).

9. The two-part kit according to any one of the preceding claims, wherein the average droplet diameter of the discrete droplets of glycerol in part (A) and/or part (B) is between 0.05-10 µm, such as between 0.1-10 µm, between 0.1-5 µm, between 0.5-5 µm, between 1-5 µm, or between 2-3 µm.

10. The two-part kit according to any one of the preceding claims, wherein the standard deviation of the average droplet diameter between the largest and the smallest droplets of glycerol in part (A) and/or part (B) is less than 5 µm, preferably less than 2 µm, more preferably less than 1.5 µm, most preferably less than 1.0 µm.

11. The two-part kit according to any one of claims 2-10, wherein the concentration of the glycerol in the cured silicone product is between 10 to 160 phr, preferably between 15 to 160 phr, more preferably 15-100 phr, more preferably 30-100 phr, most preferably 30-80 phr of said cured silicone product.

12. The two-part kit according to any one of the preceding claims, wherein said cured silicone product is an adhesive and wherein the weight ratio of part A to part B (A:B) is in the range 0.9:1 to 2.6:1.

13. The two-part kit according to claim 12, wherein the polysiloxane phase of part A is stabilized with a silicone resin of type Q or MQ, preferably a silanol-trimethylsilyl modified Q resin, in a concentration of 0.5-3 phr.

14. The two-part kit according to any one of claims 12-13, wherein the glycerol has been loaded with a gelation agent or an active substance, preferably in an amount of 5-50 phg.

15. The two-part kit according to any one of claims 1-11, wherein said cured silicone product is an elastomer and wherein the weight ratio of part A to part B (A:B) is in the range 8:1 to 31:1.

16. The two-part kit according to claim 15, further comprising a non-reactive silicone oil, preferably in a concentration from 5-10 phr, in part A and/or in part B, preferably in part A.

17. The two-part kit according to claim 6, comprising curing catalyst, preferably a Pt-curing catalyst, in an amount of 5-30 ppm.

18. The two-part kit according to any one of the preceding claims, wherein the dynamic viscosity of the first part (A) - prior to addition of glycerol - is greater than the dynamic viscosity of the second part (B).

19. The two-part kit according to any one of the preceding claims, wherein the dynamic viscosity of the first part (A) is in the range of 1-100 Pa·s, preferably 1-40 Pa·s, more preferably 2-30 Pa·s.

20. The two-part kit according to any one of the preceding claims, wherein the dynamic viscosity of the second part (B) is in the range of 1-30 Pa·s, preferably 1-20 Pa·s.

21. A process for providing a cured silicone product, said process comprising:
- providing a first part (A) according to any one of the preceding claims,
- providing a second part (B) according to any one of the preceding claims,
- mixing said first (A) and said second (B) part and allowing the mixture to cure.

22. The process according to claim 21, wherein the cured silicone product is in the form of a thin film on a substrate, and wherein said process comprises the additional step of coating mixed first (A) and second (B) parts on said substrate prior to curing.
